# EUROPÄISCHE PATENTANMELDUNG

(11) **EP 2 705 928 A1**
(43) Veröffentlichungstag der Anmeldung: **12.03.2014**
(21) Anmeldenummer: 13182606.7
(22) Anmeldetag: 02.09.2013
(51) Int. Cl.: B23Q 5/32, B23B 47/34

(54) **Bohrmaschine und -Verfahren mit überlagerter oszillierenden Vorschubbewegung**

(30) Priorität: 07.09.2012 DE 102012108378
(71) Anmelder: Indubrand AG, 6340 Baar (CH)
(72) Erfinder: Lübbering, Achim, 33442 Herzebrock-Clarholz (DE)
(74) Vertreter: Habbel, Ludwig

(57) **Zusammenfassung**

Bei einer Bohrmaschine (1) zum Herstellen einer hochpräzisen Bohrung sowie einem Verfahren zum Herstellen einer hochpräzisen Bohrung in einem Werkstück schlägt die Erfindung vor, dass die Bohrmaschine eine das Bohrwerkzeug tragende Spindel (2) aufweist, ein so genannter Hauptantrieb vorgesehen ist, mittels welchem die Spindel sowohl drehend als auch mit einem axialen Vorschub angetrieben ist, und ein so genannter Nebenantrieb vorgesehen ist, mittels welchem die Spindel in axialer Richtung oszillierend, der Vorschubbewegung überlagert angetrieben ist, wobei der Nebenantrieb ein erstes Element mit wellenförmiger Oberfläche (8) aufweist, welches gegenüber einem zweiten Element des Nebenantriebs beweglich ist, derart, dass bei einer Relativbewegung des ersten und des zweiten Elements zueinander ein Element den Wellenbergen und Wellentälern des anderen Elements folgend oszillierend angetrieben ist und diese Oszillationsbewegung auf die Spindel übertragen wird, und wobei beide Elemente des Nebenantriebs angetrieben sind, derart, dass die Relativbewegung dieser beiden Elemente zueinander höchstens 30% der Drehzahl der Spindel beträgt.

## Beschreibung

Die Erfindung betrifft eine Bohrmaschine zum Herstellen einer hochpräzisen Bohrung.

In der Praxis werden beim Herstellen von Bohrungen teilweise sehr hohe Anforderungen an die Präzision gestellt, beispielsweise an den einzuhaltenden Durchmesser und die kreisrunde Kontur der Bohrung. In diesem Zusammenhang ist es bekannt, den Bohrer während seiner Vorschubbewegung in axialer Richtung geringfügig hin und her zu bewegen.

Aus der DE 10 2007 053 350 A1 ist ein Verfahren zur spanabhebenden Bearbeitung von Werkstücken bekannt. Bei einer programmierbaren Bohrmaschine wird die Vorschubbewegung steuerungstechnisch mit einem einstellbaren Oszillationsanteil versehen. Diese Bohrmaschine weist zwei Antriebe auf, die unabhängig voneinander steuerbar sind und von denen einer dazu dient, die Spindel in Drehung zu versetzen. Ein zweiter Antrieb ist für den Vorschub des Werkzeugs vorgesehen und wird so angesteuert, dass diese Vorschubbewegung mit einem Oszillationsanteil versehen wird. Eine mechanische Überlagerung der Oszillationsbewegung wird als nachteilig beschrieben.

Aus der Praxis ist eine solche mechanische Überlagerung der Oszillationsbewegung bekannt. Der kontinuierlichen Vorschubbewegung des Bohrwerkzeugs, die durch einen im Rahmen des vorliegenden Vorschlags so genannten Hauptantrieb erfolgt, wird eine axial oszillierende Bewegung überlagert, die durch einen so genannten Nebenantrieb erfolgt. Unabhängig davon, ob sich die Elemente des Nebenantriebs unmittelbar an der Spindel befinden oder nicht, also gegebenenfalls auch Teil des Hauptantriebs sind, werden diejenigen Teile im Rahmen des vorliegenden Vorschlages als Nebenantrieb bezeichnet, welche die oszillierende Bewegung der Spindel erzeugen. Die mechanische Überlagerung der Oszillationsbewegung ermöglicht im Unterschied zu dem oben erwähnten steuerungstechnisch einstellbaren Oszillationsanteil der Vorschubbewegung, dass die betreffende Bohrmaschine ohne elektrische Energieversorgung angetrieben werden kann, beispielsweise pneumatisch.

Aus der DE 20 2005 008 630 U1 ist eine Bohrvorrichtung bekannt, bei der ebenfalls eine mechanische Überlagerung der Oszillationsbewegung vorgesehen ist. Hierzu steht eine Pendelscheibe schräg zur Spindelachse. Die Pendelscheibe ist als Ring ausgestaltet, der um die Spindel verläuft und eine ringförmig um die Spindel verlaufende Führungsnut aufweist, in welcher eine Kugel um die Spindel umlaufend geführt ist. Durch diesen Kugelumlauf ändert sich ständig die Schrägstellung der Pendelscheibe, und deren resultierende Nickbewegung wird in eine oszillierende Bewegung umgesetzt, die in Bohrrichtung hin und her geht.

Aus der DE 102 02 747 A1 ist eine Bohrmaschine bekannt, bei welcher nicht die Herstellung einer Präzisionsbohrung in metallischen Werkstoffen im Vordergrund steht, sondern die Verwendung einer Diamantbohrkrone bzw. Trockenbohrkrone. Die Bohrung wird in einen Werkstoff eingebracht, der Bohrstaub erzeugt, wie dies bei Schlagbohrmaschinen bekannt ist. Die Bohrwirkung wird ausschließlich durch die Rotation des Bohrwerkzeugs erreicht. Der Bohrstaub erhöht die Reibung der Bohrkrone und kann zu einer unerwünschten Erhöhung der auf das Werkzeug einwirkenden Temperatur führen. Auch hier ist eine mechanische Überlagerung der Oszillationsbewegung vorgesehen, indem der Arbeitsspindel ein Nockenhubwerk zugeordnet ist, um mittels einer sanften Axialbewegung des Bohrwerkzeugs den Bohrstaub aus der Bohrung zu entfernen. Das Nockenhubwerk weist eine gemeinsam mit der Arbeitsspindel drehende Hubscheibe sowie einen gehäusefesten Ringkörper auf, so dass die volle Spindeldrehzahl die Anzahl der Hübe bestimmt. Durch eine wellenförmige Nockenkontur des erwähnten Nockenhubwerks soll eine harmonische Axialbewegung erfolgen und die Erwärmung des Bohrwerkzeugs, insbesondere einer Diamantbohrkrone, gering gehalten werden.

Für die Erzeugung einer Präzisionsbohrung ist von Bedeutung, dass durch die in der Vorschubachse erfolgende oszillierende Bewegung während des Vorschubs die entstehenden Bohrspäne gebrochen werden, so dass sie problemlos durch am Umfang des Bohrwerkzeugs verlaufende Nuten aus dem Werkstück herausgefördert werden können. Dadurch wird die Gefahr reduziert, dass ein entstehender Span am Rand der erzeugten Bohrung, bei weiterem Vorschub des Bohrwerkzeugs, an dem Bohrlochrand reibt und diesen möglicherweise beschädigt und ggf. die Geometrie der Bohrung verändert, insbesondere deren Durchmesser. Beispielsweise im Bereich der Luftfahrtindustrie, wo aus Sicherheitsgründen höchste Anforderungen an die Position und die Geometrie der einzelnen Bohrungen gestellt werden, wird ein gattungsgemäßes Verfahren angewendet, um die Bohrungen zu erzeugen und die dabei entstehenden Späne während des Bohrens zu brechen und aus der Bohrung zu fördern.

Der Oszillationsantrieb der Spindel kann unter Umständen mit hohem Verschleiß behaftet sein, wenn beispielsweise zusammen mit der Spindel, und dementsprechend mit Spindeldrehzahl, ein Wellenkranz läuft, dessen Wellenprofil an einem gehäusefesten, sich nicht mitdrehenden Gegenstück anliegt. Diese mit hoher Relativdrehzahl aneinander ablaufenden Flächen verschleißen vergleichsweise schnell und verkürzen die Standzeit der Bohrmaschine in wirtschaftlich nachteiliger Weise.

Der Erfindung liegt die Aufgabe zugrunde, eine Bohrmaschine anzugeben, die mit langer Standzeit betrieben werden kann, und ein Verfahren anzugeben, mit welchem eine möglichst große Anzahl von hochpräzisen Bohrungen möglichst komplikationslos hergestellt werden kann.

Diese Aufgabe wird durch eine Bohrmaschine nach Anspruch 1 und ein Verfahren nach Anspruch 10 gelöst. Vorteilhafte Ausgestaltungen der Erfindung sind in den Unteransprüchen beschrieben.

Die Erfindung schlägt mit anderen Worten vor, zwischen den beiden Elementen des Nebenantriebs keinen so genannten "absoluten" Drehzahlunterschied zu erzeugen, bei welchem nämlich ein Element nicht angetrieben ist und das andere Element mit der vollen Spindeldrehzahl angetrieben ist. Vielmehr wird vorschlagsgemäß eine Relativbewegung zwischen diesen beiden Elementen erzeugt, indem beide Elemente angetrieben werden. Diese Relativbewegung beider Elemente zueinander, die auch als so genannter "relativer" Drehzahlunterschied bezeichnet werden kann, beträgt höchstens 30% der Spindeldrehzahl, also höchstens 30% des oben erwähnten "absoluten" Drehzahlunterschieds zwischen der Spindel und einem feststehenden Element. Der Antrieb des Bohrwerkzeugs erfolgt im Wesentlichen nach dem Prinzip der Leitspindel, welches seit Jahrzehnten bekannt ist.

Wenn die beiden Elemente des Nebenantriebs drehangetrieben sind, beträgt dementsprechend die so genannte Relativdrehzahl, mit welcher die beiden Elemente aufeinander abgleiten, höchstens 30% der absoluten Drehzahl, nämlich der Spindeldrehzahl. So ergibt sich eine erheblich geringere mechanische Belastung des Nebenantriebs und dadurch eine erheblich längere Standzeit der Bohrmaschine. Vorteilhaft kann die Relativdrehzahl sogar nur höchstens 15% der Spindeldrehzahl betragen, beispielsweise zwischen 2% und 15%, um die mechanische Belastung besonders weit herabzusetzen.

Im Rahmen des vorliegenden Vorschlags wird von einer relativen Drehzahl gesprochen, also von einem Drehzahlunterschied zwischen den beiden zur Oszillationsbewegung erforderlichen Bauteilen, die erheblich unter der Drehzahl der Spindel liegt. So kann beispielsweise aus dieser verringerten, so genannten Relativdrehzahl resultieren, dass die Spindel im Oszillations- bzw. Bohrbetrieb bei jeder Umdrehung weniger als 10 Hübe ausführt. Insbesondere kann vorteilhaft vorgesehen sein, dass die Spindel dabei weniger als 2 Hübe ausführt. Die mechanische Belastung der Bohreinheit, insbesondere des Nebenantriebs, ist auf diese Weise so gering, dass sehr lange Standzeiten der Maschine ermöglicht werden und dennoch ein die gewünschte Bohrpräzision sicherstellendes Brechen der Späne erreicht wird. Die Bruchwirkung ist zudem dadurch beeinflussbar, dass die Anzahl der Wellentäler und Wellenberge die Anzahl der Oszillationshübe bestimmt, die bei einer Relativ-Umdrehung ausgeführt werden, wenn die beiden Elemente des Nebenantriebs um eine volle Drehung von 360°aneinander abgleiten.

Die geringe Relativdrehzahl wirkt sich durch einen ruhigen Lauf der Spindel und des Werkzeug vorteilhaft auf die Herstellung der Bohrung auf. Die längere Standzeit der Bohrmaschine stellt zudem sicher, dass über eine möglichst große Anzahl von Bohrungen die Arbeitsweise der Bohrmaschine möglichst gleich bleibt und keinen verschleißbedingten Änderungen unterliegt, so dass eine möglichst große Anzahl von Bohrungen unter möglichst gleichen Bedingungen hergestellt werden kann, was eine vorteilhafte Verfahrensweise bei der Herstellung der jeweiligen Bohrung darstellt.

Vorteilhaft kann vorgesehen sein, dass zur Erzeugung der Oszillationsbewegung nicht nur eine einzige wellenförmige Oberfläche im Nebenantrieb vorgesehen ist, die an einer Gegenfläche wie beispielsweise einem Stift oder anderweitigen Vorsprung entlang läuft. Vielmehr können vorzugsweise zwei miteinander zusammenwirkende Elemente mit jeweils wellenförmiger Oberfläche im Nebenantrieb vorgesehen sein. Dadurch, dass die beiden Bauteile mit wellenförmiger Oberfläche aufeinander abgleiten, tauchen die Wellenberge des einen Elements abwechselnd in die Wellentäler des anderen Elementes ein oder liegen den Wellenbergen des anderen Elementes an, so dass durch die Relativbewegung zwischen diesen beiden Elementen die Oszillationsbewegung bewirkt wird. Durch die beiden wellenförmigen Oberflächen wird eine größere Kontaktfläche geschaffen, so dass die Flächenpressungen und somit auch der Verschleiß der beiden aneinander gleitenden Bauteile verringert wird.

Aus der Praxis ist es bekannt, spezielle Bohr- und Senkwerkzeuge zu verwenden, die nachfolgend vereinfachend als Bohrwerkzeuge bezeichnet werden und die sowohl einen vorderen Bohrabschnitt als auch einen daran anschließenden Senkungsabschnitt aufweisen. Diese Bohrwerkzeuge ermöglichen es somit, in einem einzigen Arbeitsgang nach der Bohrung auch eine Senkung im Werkstück zu erzeugen. Bei aus der Praxis bekannten Bohrmaschinen wird im Senkpunkt der Vorschub der Spindel und damit auch des Bohrwerkzeuges gestoppt, so dass die Spindel außer der Rotation lediglich noch die geringfügige Oszillationsbewegung, die durch den Nebenantrieb verursacht wird, ausführt.

Im Unterschied dazu kann vorteilhaft vorgesehen sein, den Nebenantrieb vor Beendigung des Senkvorgangs außer Kraft zu setzen, so dass die Oszillationsbewegung der Spindel nicht mehr stattfindet, wenn die Senkung beendet wird. Auf diese Weise wird eine besonders glatte Oberfläche der Senkung erzielt. Diese glatte Oberfläche ist frei von so genannten Rattermarken, wie sie nicht ausgeschlossen werden können, wenn die Spindel sich oszillierend bewegt, während der Senkungsabschnitt des oben erwähnten Bohr- und Senkwerkzeugs die Senkung im Werkstück erzeugt. Durch diese so genannten Rattermarken kann nämlich das Problem bestehen, dass ein in die Bohrung eingebrachtes Befestigungselement, z. B. ein Niet oder eine Schraube, der Oberfläche der Senkung nicht vollflächig anliegt, da diese Oberfläche der Senkung aufgrund der Rattermarken eine gewisse Welligkeit aufweist. Das jeweilige Befestigungselement wird mit einer vorgegebenen Vorspannung montiert, indem der Niet angezogen wird bzw. die Schraube mit einem vorbestimmten Drehmoment angezogen wird. Es ist nicht auszuschließen, dass sich die wellige Oberfläche der Senkung anschließend geringfügig verformt, so dass sich das Befestigungselement setzen und dementsprechend lockern kann. Die Sicherheit der hergestellten Verbindung von Bauteilen ist daher gefährdet. Wird hingegen der Nebenantrieb wie oben erwähnt außer Kraft gesetzt, findet die der eigentlichen Vorschubbewegung überlagerte Oszillation der Spindel nicht mehr statt. Senkoberflächen können daher mit einer noch höheren Präzision als bislang erstellt werden, da während des Senkens erstens eine glatte Oberfläche der Senkung erzeugt und zweitens eine besonders präzise Bestimmung der Senktiefe ermöglicht wird.

Wenn zwei Elemente des Nebenantriebs mit jeweils wellenförmiger Oberfläche vorgesehen sind, wie weiter oben beschrieben, kann die Relativbewegung der beiden Elemente des Nebenantriebs nach dem Herstellen der Bohrung vorteilhaft derart beendet werden, dass dabei die Wellenberge des einen Elements in die Wellentäler des anderen Elementes eintauchen und somit eine möglichst vollflächige Anlage dieser beiden Elemente und eine stabile Positionierung dieser beiden Elemente zueinander bewirkt wird. Eine zuverlässige, spielfreie und sichere Führung der Spindel und die zuverlässige Vermeidung von Relativbewegungen dieser beiden Elemente wird dadurch unterstützt. Nachdem auf diese Weise die Relativbewegung zwischen dem ersten und dem zweiten Element vermieden ist, kann die Spindel weiter drehen, um die Senkung fertigzustellen. Im Interesse möglichst kurzer Taktzeiten kann vorgesehen sein, dass die Relativbewegung zwischen den beiden genannten Elementen nicht bereits unterbrochen wird, bevor mit dem Erstellen der Senkung überhaupt begonnen wird: Selbst wenn zu Beginn des Senkvorgangs die Oszillation der Spindel noch stattfindet und Rattermarken erzeugt werden, so wird die mit Rattermarken versehene Oberfläche der Senkung automatisch beim weiteren Fortschritt der Senkung abgetragen. Wenn während des Senkvorgangs und vor dessen Beendigung die Oszillationsbewegung der Spindel beendet wird, ist jedenfalls sichergestellt, dass die Beendigung des Senkvorgangs mit den beschriebenen Vorteilen erfolgen kann, nämlich einerseits mit einer sehr präzise bestimmten Position des Senkwerkzeugs und dementsprechend einer sehr präzise bestimmbaren Senktiefe, und andererseits mit einer besonders glatten Oberfläche der Senkung, die zuverlässig frei von Rattermarken ist.

Vorteilhaft kann die Bohrmaschine ausschließlich pneumatisch angetrieben sein. Der Verzicht auf elektrische Komponenten einschließlich Elektromotoren ermöglicht es, die Bohrmaschine mit kleinen Abmessungen und geringem Gewicht herzustellen, und dass die Bohrmaschine Anforderungen an höhere Schutzklassen einschließlich Explosionsschutz vergleichsweise problemlos erfüllen kann.

Ein Ausführungsbeispiel einer vorschlagsgemäßen Bohrmaschine sowie das vorschlagsgemäße Verfahren werden anhand der rein schematischen Darstellungen nachfolgend nähert erläutert. Dabei zeigt
- Fig. 1: einen Querschnitt durch eine Bohrmaschine,
- Fig. 2: zwei Bauelemente des Nebenantriebs der Maschine von Fig. 1 in radialer Ansicht,
- Fig. 3: die beiden Bauelemente von Fig. 2 in perspektivischer Ansicht,
- Fig. 4: zwei Antriebsräder der Maschine von Fig. 1, und
- Fig. 5: ein Werkstück sowie ein darin teilweise eingedrungenes Werkzeug während des Bohrvorgangs.

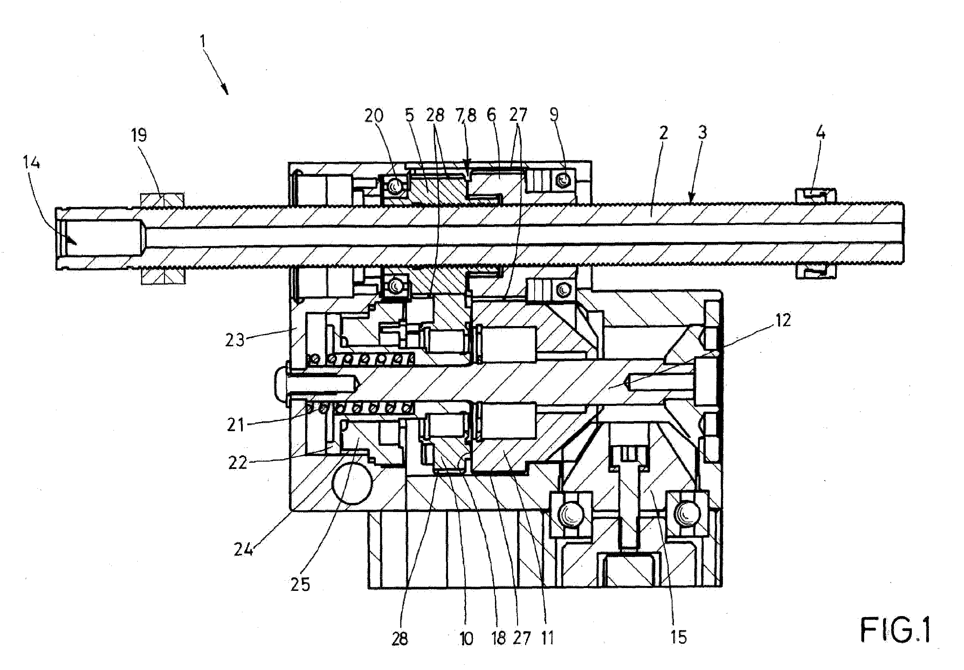

In Fig. 1 ist mit 1 insgesamt eine Bohrmaschine bezeichnet, die ein Gehäuse 23 und darin eine Spindel 2 aufweist, welche an ihrer Außenseite mit einem Gewinde 3 versehen ist. Links ist eine Werkzeugaufnahme 14 in Form einer Ausnehmung in der Spindel 2 dargestellt, wobei ein Bohrwerkzeug und insbesondere vorteilhaft ein kombiniertes Bohr- und Senkwerkzeug in der Werkzeugaufnahme 14 gehalten werden kann.

Die Funktionsweise der Bohrmaschine 1 wird nachfolgend anhand eines Arbeitszyklus erläutert, indem der zeitliche Ablauf eines Bohr- und Senkvorgangs bis zu der erneuten Arbeitsbereitschaft der Bohrmaschine 1 beschrieben wird.

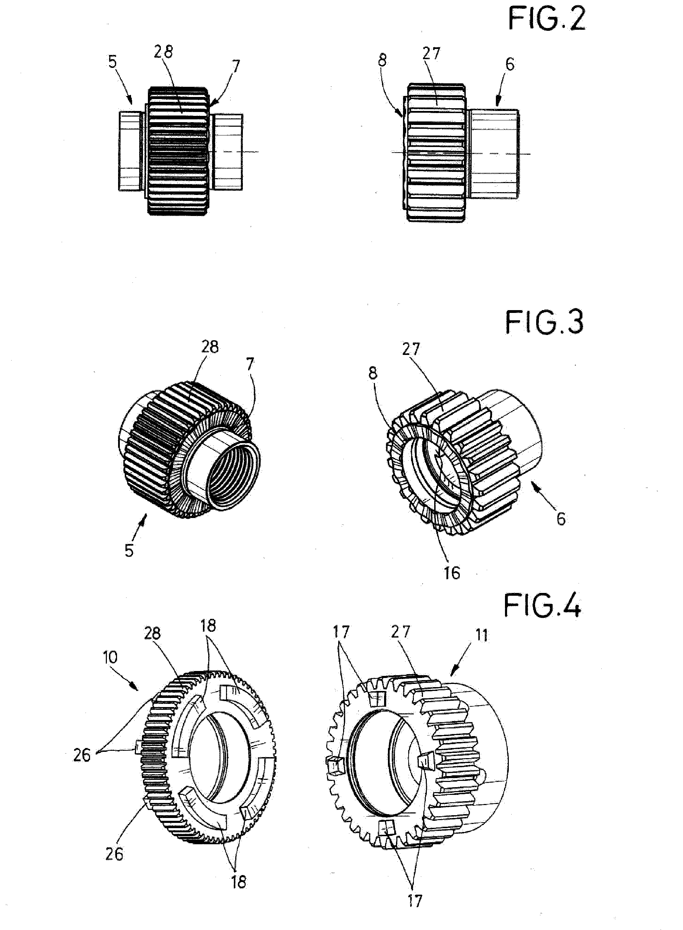

Zum Antrieb der Spindel 2 ist lediglich ein einziger Antriebsmotor erforderlich, welcher ein als Kegelrad ausgestaltetes Eingangsrad 15 antreibt. Das Eingangsrad 15 setzt über die Kegelverzahnung ein erstes Antriebsrad 11 in Drehung, welches auf einer Welle 12 gelagert ist. Das Antriebsrad 11 wirkt auf zwei weitere Räder ein:
Mittels einer umlaufenden Stirnverzahnung 27 treibt das Antriebsrad 11 ein Spindelzahnrad 6 an, welches eine komplementäre Stirnverzahnung 27 aufweist und die Drehbewegung der Spindel 2 bewirkt. Hierzu ist die Spindel 2 an ihrem äußeren Umfang mit einer Nut versehen, die in Längsrichtung der Spindel 2 verläuft und in die eine aus Fig. 3 ersichtliche Klaue 16 des Spindelzahnrades 6 eingreift. Wenn das Spindelzahnrad 6 an seiner Position innerhalb der Bohrmaschine 1 verbleibt, aber in Drehung versetzt ist, wird dementsprechend die Spindel 2 mit derselben Drehzahl in Drehung versetzt, so dass die Spindeldrehzahl der Drehzahl des Spindelzahnrads 6 entspricht.

Mittels einer aus Fig. 4 ersichtlichen Nockenverzahnung, die an einem axialen Ende des Antriebsrads 11 vorgesehen ist und vier Nocken 17 umfasst, treibt das Antriebsrad 11 ein zweites Antriebsrad 10 an. Das zweite Antriebsrad 10 ist ebenfalls auf der Welle 12 gelagert und weist vier komplementäre Nocken 18 auf, welche zwischen die vier Nocken 17 des Antriebsrads 11 greifen. Die Kraftübertragung vom Antriebsrad 11 auf das Antriebsrad 10 und der Eingriff der Nocken 17 und 18 miteinander wird durch eine Druckfeder 21 sichergestellt, welche das Antriebsrad 10 gegen das Antriebsrad 11 drückt.

Das zweite Antriebsrad 10 treibt mittels einer umlaufenden Stirnverzahnung 28 ein Vorschubzahnrad 5 an, welches auf der Spindel 2 läuft und mit dem Gewinde 3 der Spindel 2 kämmt, so dass die Drehbewegung dieses Vorschubzahnrades 5 entsprechend der Gewindesteigung des Gewindes 3 einen axialen Vorschub der Spindel 2 bewirkt.

Eine erste, rechts dargestellte Mutter 4 läuft auf dem Gewinde 3 und dient als erster Endanschlag, mit welchem die Bohrtiefe einstellbar ist, indem das Maß, um welches die Spindel 2 während der Vorschubbewegung axial bewegt werden kann, bestimmt wird. Die Mutter 4 ist zu diesem Zweck von außen einstellbar, wobei die dazu erforderliche Ausgestaltung der Bohrmaschine 1 aus der rein schematischen, vereinfachten Darstellung nicht ersichtlich, jedoch an sich bekannt ist. Eine zweite, links dargestellte Mutter 19 dient als zweiter Endanschlag der Spindel 2, welcher deren Rücklaufbewegung begrenzt, wie weiter unten näher erläutert werden wird.

Der Nebenantrieb, der vorgesehen ist, um eine oszillierende Bewegung der Spindel 2 zu erzeugen, umfasst als zwei für die Oszillationsbewegung wesentliche Elemente das Vorschubzahnrad 5 und das Spindelzahnrad 6. Das Vorschubzahnrad 5 ist dabei gleichzeitig auch Teil des Hauptantriebs der Spindel 2, welcher den Vorschub der Spindel 2 bewirkt. Das Spindelzahnrad 6 ist ebenfalls gleichzeitig Teil des Hauptantriebs der Spindel 2, indem es die Drehbewegung der Spindel 2 bewirkt. Die beiden Vorschub- und Spindelzahnräder 5 und 6 sind mit geringfügig unterschiedlichen Drehzahlen angetrieben, wobei das Vorschubzahnrad 5 mit einer geringfügig höheren Drehzahl dreht als das Spindelzahnrad 6.

Beide Antriebsräder 10 und 11 laufen auf derselben Welle 12, und zwar aufgrund ihrer Nockenverzahnung mit den Nocken 17 und 18 mit derselben Drehzahl. Unterschiedliche Drehzahlen der beiden Vorschub- und Spindelzahnräder 5 und 6 resultieren aus den geringfügig unterschiedlichen Übersetzungsverhältnissen zwischen dem Antriebsrad 10 und dem Vorschubzahnrad 5 einerseits sowie dem Antriebsrad 11 und dem Spindelzahnrad 6 andererseits.

Wie aus den Fig. 2 und 3 hervorgeht, weisen die beiden Vorschub- und Spindel-Zahnräder 5 und 6 an ihren beiden axial zueinander gerichteten Enden jeweils eine wellenförmige Oberfläche 7 und 8 auf, die ringförmig um die Mittelachse der beiden Vorschub- und Spindel-Zahnräder 5 und 6 bzw. um die Spindel 2 herum verlaufen. Mit diesen wellenförmigen Oberflächen 7 und 8 liegen die beiden Vorschub- und Spindelzahnräder 5 und 6 einander an. Aufgrund der unterschiedlichen Drehzahlen der beiden Zahnräder 5 und 6 gleiten diese wellenförmigen Oberflächen 7 und 8 vergleichsweise langsam aneinander ab, so dass sich beispielsweise lediglich etwa 1,5 Hübe pro Umdrehung der Spindel 2 ergeben. Dies schont die Bohrmaschine 1 erheblich und stellt gleichzeitig sicher, dass die beim Bohren entstehenden Späne zuverlässig gebrochen werden und abgefördert werden können. Vergleichsweise geringe Relativdrehzahlen zwischen den beiden Vorschub- und Spindel-Zahnrädern 5 und 6 stellt sich stets ein, unabhängig davon, ob sich die beiden Antriebsräder 10 und 11 mit einer gemeinsamen Drehzahl von so unterschiedlichen Werten wie 300/min oder 8000/min drehen. Dadurch, dass diese Relativdrehzahl erheblich unter der Spindeldrehzahl liegt, wird der Nebenantrieb erheblich geschont und sein Verschleiß gemindert.

Dass die beiden Oberflächen 7 und 8 gegeneinander gepresst werden, resultiert aus dem Druck, der in axialer Richtung auf die Spindel 2 wirkt, wenn ein Werkstück bearbeitet wird. Ohne diesen Druck kann das Vorschubzahnrad 5 mitsamt einem darauf fest montierten Kugellager 20 im Gehäuse 23 der Bohrmaschine in Vorschubrichtung ausweichen, in der Fig. 1 also nach links, wo links neben dem Kugellager 20 ein geringes Spiel erkennbar ist. Durch diese Möglichkeit, beim belastungslosen Lauf der Spindel 2 den Nebenantrieb außer Wirkung zu setzen, wird der Verschleiß des Nebenantriebs weiter reduziert, zusätzlich zu dem ohnehin verschleißarmen Betrieb des Nebenantriebs aufgrund der geringen Relativdrehzahl zwischen den beiden Vorschub- und Spindel-Zahnrädern 5 und 6 bzw. deren wellenförmigen Oberflächen 7 und 8.

Die vorbestimmte Bohrtiefe ist erreicht, wenn die Mutter 4 gegen ein Lager 9 gerät. Aufgrund der Gewindesteigung des Gewindes 3 werden die beiden Vorschub- und Spindelzahnräder 5 und 6 nun aneinander gepresst werden und gehen "auf Block", da die Spindel 2 nicht weiter nach links ausweichen und vorgeschoben werden kann. Die Vorschub- und Spindelzahnräder 5 und 6 laufen nicht mehr weiter mit einer Relativdrehzahl zueinander, sondern mit gleicher Drehzahl. Für ihre wellenförmigen Oberflächen 7 und 8 bedeutet dies, dass die Wellenberge des einen Zahnrads dabei in die Wellentäler des anderen Zahnrads einzutauchen und einen Formschluss herzustellen beginnen. Eine Oszillationsbewegung der Spindel 2 wird von nun an vermieden.

Durch diesen Gleichlauf der Vorschub- und Spindelzahnräder 5 und 6 in der Endlage der Spindel 2 sowie aufgrund deren unterschiedlicher Übersetzungsverhältnisse zu den Antriebsrädern 10 und 11 verspannen sich die beiden Antriebsräder 10 und 11 unterhalb der Vorschub- und Spindelzahnräder 5 und 6 gegeneinander. Schräge Flanken der Nocken 17 und 18 zwischen diesen beiden Antriebsrädern 10 und 11 führen dazu, dass die Antriebsräder 10 und 11 auf der gemeinsamen Welle 12 voneinander getrennt werden, indem sich das links dargestellte Antriebsrad 10, welches mit dem Vorschubrad 5 kämmt, gegen die Wirkung der Druckfeder 21 axial nach links verschiebt. Da die Zähne des Antriebsrads 10 nur jeweils einer Teilfläche der Zähne des Vorschubzahnrads 5 anliegen, ist das Antriebsrad 10 dabei entlang dem Vorschubzahnrad 5 in Längsrichtung der Spindel 2 beweglich.

Die Antriebe der Vorschub- und Spindelzahnräder 5 und 6 werden also entkoppelt. Das Antriebsrad 11 läuft weiter und treibt die Spindel 2 weiterhin über das Spindelzahnrad 6 an, allerdings oszillationsfrei, da der Nebenantrieb abgeschaltet ist und sich die Vorschub- und Spindelzahnräder 5 und 6 drehen, ohne eine Relativbewegung zueinander auszuführen, so dass ihre wellenförmigen Oberflächen 7 und 8 nicht aufeinander abgleiten.

Die oszillationsfrei erzeugte Oberfläche der Senkung wird mit hoher Qualität und mit einer möglichst geringen Oberflächenrauhigkeit hergestellt, so dass Rattermarken vermieden werden können und die Oberfläche der Senkung optimal ausgeführt werden kann.

Mit dem links dargestellten Antriebsrad 10 ist ein Kolben 22 verbunden, so dass dieser zusammen mit dem Antriebsrad 10 nach links verschoben wird, wenn die beiden Antriebsräder 10 und 11 wie oben beschrieben am Ende des Spindelvorschubs getrennt werden. Mittels einer so genannten Schaltfahne steuert der Kolben 22 ein pneumatisches Ventil an, wenn er seine dem Gehäuse 23 nahe Endstellung erreicht hat und mitsamt dem Antriebsrad 10 so weit wie möglich nach links verschoben ist.

Über das erwähnte pneumatische Ventil wird Druck in einem Raum 24 aufgebaut, welcher durch den Kolben 22, das Gehäuse 23 und eine ortsfest montierte Sperrbuchse 25 begrenzt ist. Durch diesen Druck wird unterstützt, dass der Kolben 22 gegen die Wirkung der Druckfeder 21 seine dem Gehäuse 23 nahe Endstellung beibehält und das Antriebsrad 10 vom Antriebsrad 11 getrennt bleibt, die Verzahnung der Nocken 17 und 18 also unterbrochen bleibt.

Das Antriebsrad 10 liegt in dieser Stellung der Sperrbuchse 25 an. Sperrklauen sind einerseits an der Sperrbuchse 25 und andererseits an dem Antriebsrad 10 vorgesehen. Sie können beispielsweise ähnlich wie die Verzahnung der Nocken 17 und 18 ausgestaltet sein. Einige Sperrklauen des Antriebsrads 10 sind in Fig. 4 erkennbar und dort mit 26 gekennzeichnet. Die Sperrklauen 26 bewirken eine drehfeste Anlage des Antriebsrads 10 an der Sperrbuchse 25. Das linke Antriebsrad 10 ist also hinsichtlich seiner Drehbeweglichkeit festgesetzt und dreht sich nicht. Dementsprechend ist auch das Vorschubzahnrad 5 hinsichtlich seiner Drehbeweglichkeit festgesetzt, da es mit dem Antriebsrad 10 über die Stirnverzahnung 28 verzahnt ist.

Da sich das rechte Antriebsrad 11 nach wie vor dreht, treibt es nach wie vor das Spindelzahnrad 6 an, während das Vorschubzahnrad 5 hinsichtlich seiner Drehbeweglichkeit nun fest steht. Da der Vorschub der Spindel 2 beendet ist und dementsprechend kein axialer Druck vom Werkzeug her auf die Spindel 2 einwirkt, entfällt der Anpressdruck, welcher die beiden wellenförmigen Oberflächen 7 und 8 gegeneinander presst. Der schräge Verlauf der Wellen an den Oberflächen 7 und 8 bewirkt aufgrund des Drehantriebs des Spindelzahnrads 6, dass das Vorschubzahnrad 5 sich entsprechend dem vorhandenen Spiel nach links, gegen das Kugellager 20 bewegt und die beiden Oberflächen 7 und 8 voneinander getrennt werden. Anschließend kann das Spindelzahnrad 6 frei weiter drehen, während das Vorschubzahnrad 5 hinsichtlich seiner Drehbeweglichkeit fest stehen bleibt.

Da sich das rechte Antriebsrad 11 zusammen mit dem Spindelzahnrad 6 nach wie vor dreht, wird über das Spindelzahnrad 6 und dessen Klaue 16 die Spindel 2 nach wie vor in Drehung versetzt. Sie läuft innerhalb des nun fest stehenden Vorschubzahnrads 5, so dass die axiale Bewegungsrichtung der Spindel 2 umgekehrt wird und der Rücklauf der Spindel 2 beginnt.

Der Rücklauf der Spindel 2 wird durch die zweite, links dargestellte Mutter 19 begrenzt, welche als zweiter Endanschlag der Spindel 2 dient. Wenn diese Mutter 19 gegen das Gehäuse 23 gerät oder geringfügig in das Gehäuse 23 eintaucht, betätigt sie eine dort angeordnete Schaltfahne, die mittels eines entsprechenden pneumatischen Ventils den eingangs erwähnten Motor abschaltet, welcher das Eingangsrad 15 antriebt. Zudem wird mittels einer entsprechenden Ventilsteuerung der Druck im Raum 24 abgebaut, so dass mittels der Druckfeder 21 der Kolben 22 wieder zurück nach rechts gedrückt wird. Dabei nimmt der Kolben 22 das linke Antriebsrad 10 mit, so dass die Nockenverzahnung zum rechten Antriebsrad 11 mittels der Nocken 17 und 18 wieder hergestellt wird. Die Bohrmaschine 1 ist nun für einen neuen Arbeitszyklus arbeitsbereit, so dass der beschriebene Arbeitszyklus erneut durchlaufen werden kann.

Das dargestellte und beschriebene Ausführungsbeispiel einer Bohrmaschine ist als pneumatische Bohrmaschine ausgestaltet. Konstruktive Details dieses Ausführungsbeispiels können losgelöst von dem gesamten Zusammenhang dieses Ausführungsbeispiels, wie für einen Fachmann erkennbar ist, abgewandelt oder auch bei einer anderen, ähnlich ausgestalteten Bohrmaschine angewendet werden, z. B. bei einer elektrischen Bohrmaschine.

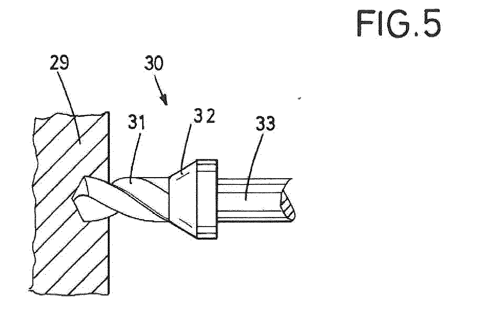

Vorschlagsgemäß kann ein Verfahren durchgeführt werden, welches die Herstellung einer hochpräzisen Bohrung in einem Werkstück 29 ermöglicht, welches in Fig. 5 dargestellt ist. Die dazu verwendete Bohrmaschine weist eine das Bohrwerkzeug tragende Spindel auf und kann wie die vorschlagsgemäß ausgestaltete Bohrmaschine 1 ausgestaltet sein. Jedenfalls wird mittels eines so genannten Hauptantriebs die Spindel der verwendeten Bohrmaschine sowohl drehend als auch mit einem axialen Vorschub angetrieben. Mittels eines so genannten Nebenantriebs wird eine in axialer Richtung der Spindel oszillierende Bewegung erzeugt und der Vorschubbewegung überlagert. Der Nebenantrieb weist ein erstes Element mit wellenförmiger Oberfläche auf, welches gegenüber einem zweiten Element des Nebenantriebs beweglich ist, so dass bei einer Relativbewegung des ersten und des zweiten Elements zueinander ein Element den Wellenbergen und Wellentälern des anderen Elements folgend oszillierend angetrieben wird und diese Oszillationsbewegung auf die Spindel übertragen wird. Dabei ist vorschlagsgemäß weiterhin vorgesehen, dass diese beiden Elemente des Nebenantriebs in der Art angetrieben werden, dass die Relativbewegung dieser beiden Elemente zueinander höchstens 30% der Relativbewegung zwischen der Spindel und einem dieser beiden Elemente beträgt.

Bei diesem Verfahren zum Herstellen einer hochpräzisen Bohrung in dem Werkstück 29 wird ein Werkzeug 30 verwendet, welches als kombiniertes Bohr- und Senkwerkzeug ausgestaltet ist. Es weist einen Einspann-Abschnitt 33 auf, mit welchem es in einer Bohrmaschine, beispielsweise der Bohrmaschine 1, montiert ist. Das Werkzeug 30 weist einen Bohrabschnitt 31 auf, welcher in an sich bekannter Weise als Bohrer ausgestaltet ist und zunächst in das Werkstück 29 eindringt, wie dies in Fig. 5 dargestellt ist. Das Werkzeug 30 weist weiterhin einen Senkabschnitt 32 auf, welcher in an sich bekannter Weise als Senkwerkzeug ausgestaltet ist.

Ausgehend von der in Fig. 5 dargestellten Situation wird, wenn die Spindel der Bohrmaschine weiter vorgeschoben wird und das Werkzeug 30 weiter in das Werkstück 29 eindringt, in dem Werkstück 29 eine Durchgangsbohrung erzeugt. Wenn anschließend das Werkzeug 30 noch weiter vorgeschoben wird, gelangt der Senkabschnitt 32 gegen das Werkstück 29 und dringt in das Werkstück 29 ein, so dass nach der Herstellung der Bohrung mit demselben Werkzeug 30 die Bohrung entgratet und eine Senkung erzeugt wird. Nach dem Herstellen der Bohrung mittels des Bohrabschnitts 31 und bevor die Senkung fertiggestellt wird, werden die beiden Elemente des Nebenantriebs der Bohrmaschine festgesetzt, die bislang eine Relativbewegung zueinander ausgeführt haben, so dass diese Relativbewegung der beiden Elemente zueinander beendet wird und die Spindel der Bohrmaschine oszillationsfrei drehend bewegt wird. Dadurch wird auch das Werkzeug 30 oszillationsfrei drehend bewegt, so dass die Senkung, die mittels des Senkabschnitts 32 erzeugt wird, eine glatte Oberfläche aufweist.

Die Länge des Bohrabschnitts 31 und die Materialstärke des Werkstücks 29 sind rein beispielhaft gewählt. Bei einem dickeren Werkstück und / oder einem kürzeren Bohrabschnitt 31 können Sackbohrungen an Stelle von Durchgangsbohrungen erzeugt werden. Und wenn in Anpassung an die Materialstärke des Werkstücks 29 der Bohrabschnitt 31 möglichst kurz gewählt wird, kann der gesamte Bohrvorgang in möglichst kurzer Zeit beendet werden.

## Patentansprüche

1. Bohrmaschine zum Herstellen einer hochpräzisen Bohrung, wobei die Bohrmaschine (1) eine das Bohrwerkzeug tragende Spindel (2) aufweist,
ein so genannter Hauptantrieb vorgesehen ist, mittels welchem die Spindel (2) sowohl drehend als auch mit einem axialen Vorschub angetrieben ist,
und ein so genannter Nebenantrieb vorgesehen ist, mittels welchem die Spindel (2) in axialer Richtung oszillierend, der Vorschubbewegung überlagert angetrieben ist,
wobei der Nebenantrieb ein erstes Element mit wellenförmiger Oberfläche (8) aufweist, welches gegenüber einem zweiten Element des Nebenantriebs beweglich ist, derart, dass bei einer Relativbewegung des ersten und des zweiten Elements zueinander ein Element den Wellenbergen und Wellentälern des anderen Elements folgend oszillierend angetrieben ist und diese Oszillationsbewegung auf die Spindel (2) übertragen wird,
und wobei beide Elemente des Nebenantriebs angetrieben sind,
derart, dass die Relativbewegung dieser beiden Elemente zueinander höchstens 30% der Drehzahl der Spindel (2) beträgt.

2. Bohrmaschine nach Anspruch 1,
**dadurch gekennzeichnet,**
**dass** der Nebenantrieb mit einer der Drehzahl des Hauptantriebs angenäherten, als Relativdrehzahl bezeichneten Drehzahl läuft,
derart, dass ein geringer Drehzahlunterschied zwischen Neben- und Hauptantrieb vorliegt und die Spindel (2) im Oszillations- oder Bohrbetrieb bei jeder Umdrehung weniger als 10 Hübe ausführend angetrieben ist.

3. Bohrmaschine nach Anspruch 2,
**dadurch gekennzeichnet,**
**dass** Relativdrehzahl höchstens 25% der Spindeldrehzahl beträgt.

4. Bohrmaschine nach Anspruch 2,
**dadurch gekennzeichnet,**
**dass** die Spindel (2) im Oszillations- oder Bohrbetrieb bei jeder Umdrehung weniger als 2 Hübe ausführend angetrieben ist.

5. Bohrmaschine nach einem der vorhergehenden Ansprüche,
**dadurch gekennzeichnet,**
**dass** auch das zweite Element des Nebenantriebs eine wellenförmige Oberfläche (7) aufweist und die beiden wellenförmigen Oberflächen (7, 8) zur Erzeugung der Oszillationshübe aufeinander abgleitend angeordnet sind.

6. Bohrmaschine nach einem der vorhergehenden Ansprüche,
**dadurch gekennzeichnet,**
**dass** die Spindel (2) mittels eines Spindelzahnrads (6) drehangetrieben ist,
wobei das Spindelzahnrad (6) in Längsrichtung der Spindel (2) relativ zu dieser beweglich ist.

7. Bohrmaschine nach einem der vorhergehenden Ansprüche,
**dadurch gekennzeichnet,**
**dass** die Spindel (2) mittels eines Vorschubzahnrads (5) axial angetrieben ist,
wobei das Vorschubzahnrad (5) mit einem Gewinde (3) der Spindel (2) zusammenwirkt, derart, dass aus einer Drehung des ortsfest verbleibenden Vorschubzahnrads (5) die Axialbewegung der Spindel (2) resultiert.

8. Bohrmaschine nach den Ansprüchen 7 und 8,
**dadurch gekennzeichnet,**
**dass** das Spindelzahnrad (6) und das Vorschubzahnrad (5) Teile des Nebenantriebs bilden und jeweils eine wellenförmige Oberfläche (7, 8) aufweisen,
wobei die wellenförmigen Oberflächen (7, 8) während des Vorschubs der Spindel (2) einander anliegen und das Spindelzahnrad (6) und das Vorschubzahnrad (5) mit unterschiedlichen Drehzahlen laufend angetrieben sind.

9. Bohrmaschine nach Anspruch 8,
**dadurch gekennzeichnet,**
**dass** das Spindelzahnrad (6) und / oder das Vorschubzahnrad (5) in axialer Richtung der Spindel (2) beweglich gelagert ist, derart, dass ein Formschluss der beiden wellenförmigen Oberflächen (7, 8) miteinander wahlweise herstellbar oder lösbar ist.

10. Verfahren zum Herstellen einer hochpräzisen Bohrung in einem Werkstück,
unter Verwendung einer Bohrmaschine (1), die eine das Bohrwerkzeug tragende Spindel (2) aufweist,
wobei mittels eines so genannten Hauptantriebs die Spindel (2) sowohl drehend als auch mit einem axialen Vorschub angetrieben wird,
und mittels eines so genannten Nebenantriebs eine in axialer Richtung der Spindel (2) oszillierende Bewegung erzeugt und der Vorschubbewegung überlagert wird, wobei der Nebenantrieb ein erstes Element mit wellenförmiger Oberfläche (8) aufweist, welches gegenüber einem zweiten Element des Nebenantriebs beweglich ist, derart, dass bei einer Relativbewegung des ersten und des zweiten Elements zueinander ein Element den Wellenbergen und Wellentälern des anderen Elements folgend oszillierend angetrieben wird und diese Oszillationsbewegung auf die Spindel (2) übertragen wird,
**dadurch gekennzeichnet,**
**dass** beide Elemente des Nebenantriebs angetrieben werden, derart, dass die Relativbewegung dieser beiden Elemente zueinander höchstens 30% der Relativbewegung zwischen der Spindel (2) und einem dieser beiden Elemente beträgt.

11. Verfahren nach Anspruch 10,
**dadurch gekennzeichnet,**
**dass** nach der Herstellung der Bohrung mit demselben Werkzeug (30) die Bohrung entgratet und eine Senkung erzeugt wird,
wobei das Werkzeug (30) als kombiniertes Bohr- und Senkwerkzeug ausgestaltet ist und einen Bohrabschnitt (31) sowie einen Senkabschnitt (32) aufweist,
wobei nach dem Herstellen der Bohrung und bevor die Senkung fertiggestellt wird, die beiden Elemente des Nebenantriebs festgesetzt werden, derart, dass die Relativbewegung der beiden Elemente zueinander beendet wird und die Spindel (2) oszillationsfrei drehend bewegt wird.

12. Verfahren nach Anspruch 10 oder 11,
**dadurch gekennzeichnet,**
**dass** das Verfahren unter Verwendung einer Bohrmaschine durchgeführt wird, die nach einem der Ansprüche 1 bis 9 ausgestaltet ist.
